# EUROPEAN PATENT SPECIFICATION

(11) **EP 0 969 914 B1**
(45) Date of publication and mention of the grant of the patent: **31.05.2006**
(21) Application number: 98909589.8
(22) Date of filing: 09.03.1998
(51) Int. Cl.: B01D 53/94

(54) **EMISSION CONTROL SYSTEM FOR A LEAN-BURN INTERNAL COMBUSTION ENGINE**
EMISSIONSSTEURUNGSSYSTEM FÜR EINE BRENNKRAFTMASCHINE MIT MAGERGEMISCHVERBRENNUNG
SYSTEME DE REGULATION D'EMISSIONS POUR UN MOTEUR A COMBUSTION INTERNE A MELANGE PAUVRE

(30) Priority: 10.03.1997 GB 9705010
(43) Date of publication of application: 12.01.2000
(73) Proprietor: JOHNSON MATTHEY PUBLIC LIMITED COMPANY, London SW1Y 5BQ (GB)
(72) Inventor: TWIGG, Martyn, Vincent, Caxton Cambridge CB3 8PQ (GB)
(74) Representative: Wishart, Ian Carmichael
(86) International application number: PCT/GB1998/000705
(87) International publication number: WO 1998/040153

(56) References cited:
- EP-A- 0 514 591
- EP-A- 0 661 089
- EP-A- 0 707 883
- WO-A-93/04767
- DE-A- 2 649 825

## Description

This invention concerns improvements in emissions control systems, and more especially it concerns improvements in emissions control for engines operating at lean air/fuel ratios, *i.e.* air/fuel ratios greater than 14.7, generally in the range 19-50.

It will be appreciated that with lean-burn engines of various types, including particularly diesel, lean-burn gasoline and direct injection gasoline engines, the control of NOₓ tends to be difficult. This is understandable in that the exhaust gases contain relatively high amounts of oxygen and hence the removal of NOₓ involves reduction of NOₓ to N₂ in an overall oxidising atmosphere. Prior proposals have involved storage of NOₓ in the emission control system until a time when the exhaust gas contains relatively less oxygen, that is until the engine is running "rich", *e.g*. during acceleration. Another proposal is to store unburnt hydrocarbon until a point at which it can be released to contribute to NOₓ reduction. There remains the need, however, for yet further systems and strategies to achieve control of NOₓ emissions under lean conditions.

We have discovered that, very surprisingly, reducing the load of platinum (optionally in the presence of base metal components) compared to conventional exhaust gas catalysts, serves to increase the selectivity of the catalyst system towards NOₓ reduction.

The present invention provides a lean burn internal combustion engine comprising an emission control system comprising:
a) a Lean NOₓ Catalyst for reducing NOₓ in an exhaust gas to N₂ in the presence of a hydrocarbon reductant, which Lean NOₓ Catalyst comprising platinum as a sole Platinum Group Metal;
b) an oxidation catalyst comprising a Platinum Group Metal; and
c) means to inject hydrocarbon fuel into the exhaust gas prior to the Lean NOₓ Catalyst wherein the Lean NOₓ Catalyst is disposed between the engine and the oxidation catalyst and wherein the platinum is present in the Lean NOₓ Catalyst at a loading of <1071g m⁻³ (30g/ft³). By platinum group metal is meant platinum and/or palladium and/or rhodium.

The invention also provides a process for the control of emissions from a lean-bum internal combustion engine, which process comprising:
a) introducing hydrocarbon fuel into exhaust gas from the engine;
b) passing the exhaust gas from step (a) over a Lean NOₓ Catalyst to reduce NOₓ in the exhaust gas to N₂ in the presence of the hydrocarbon reductant, which Lean NOₓ Catalyst comprising platinum as a sole platinum group metal; and
c) passing the product gases exiting from the Lean NOₓ Catalyst over an oxidation catalyst comprising a Platinum Group Metal to oxidise hydrocarbon and carbon monoxide, wherein the platinum is present in the Lean NOₓ Catalyst at a loading of <1071 g m⁻³ (<30gft⁻³).

By selectivity for NOₓ reduction is meant the ratio of %NOₓ conversion to % hydrocarbon conversion. The catalyst system having relatively high such selectivity has a selectivity of at least 0.2, preferably at least 0.3, especially at least 0.4; this is as measured at a temperature of 230°C, a space velocity of 25000hr⁻¹ and a hydrocarbon:NOₓ input ratio of 3:1 counting the hydrocarbon as equivalent propane. The catalyst system having high activity for the oxidation of hydrocarbons and carbon monoxide has, as measured under the same conditions, a % hydrocarbon conversion of greater than 80%, preferably greater than 90%; it has, as measured under the same conditions, a % carbon monoxide conversion of greater than 70%, preferably greater than 80%, especially greater than 90%, particularly greater than 95%. Defining the catalyst systems according to measurement under these conditions does not mean of course that they are necessarily operated under these conditions. In a particular embodiment, the first catalyst system is such that the exhaust gases from the engine flow over it at a low space velocity, particularly below 40000hr⁻¹. The second catalyst system is usually such that the exhaust gases from the engine flow over it at a space velocity of 40000-80000hr⁻¹. The second catalyst system usually contains platinum. Thus, in a particular embodiment each of the first and second catalyst systems contains platinum. For use, the first catalyst system is mounted ahead of the second catalyst system in the exhaust apparatus of the engine. The present engine is preferably in a vehicle, for example a passenger car or heavy duty truck.

The skilled person may apply the present invention in a variety of ways. The first catalyst system comprises a relatively low loading of a platinum catalytically active component on a substrate, optionally in combination with components that can retain NOₓ and/or reducing species, such as zeolite or like absorbents, or alkaline earth metal compounds. The first catalyst system contains platinum as the sole Platinum Group Metal, in an amount less than 1071 g per m³ (30g/ft³).

In a particular embodiment, the first catalyst system provides a low space velocity. Normal space velocities for exhaust catalysts systems are 40000-80000hr⁻¹. A lower space velocity may be achieved readily in practice by increasing the volume of the catalyst, or by utilising two catalyst "bricks" in parallel.

The second catalyst system is required to be of high oxidation activity. Such catalyst need not have NOₓ selectivity, but must be capable of oxidising hydrocarbons and carbon monoxide under the reaction conditions, to a desired extent, usually so as to satisfy emission standards regulations. Normal space velocities may be used. The second catalyst system usually comprises platinum group metal, particularly platinum, optionally in the presence of base metal components. A suitable oxidation catalyst comprises platinum on a high surface area support, optionally with other components which promote such oxidations.

The skilled person is very familiar with conventional exhaust gas catalyst technology. Generally, a support which is a honeycomb-type extruded ceramic or wound metal monolith or "brick" is coated with a surface area-enlarging washcoat, for example a washcoat consisting of or comprising alumina. Deposited onto the washcoat is a coating of one or more catalytic components, optionally with one or more other components such as ceria, zirconia, zeolite or the like, and the catalyst may be multicomponent deposited in discrete layers or some components may be layered, with other components distributed throughout such layers. In the present invention, the actual catalysts chosen, and their construction, are not critical.

It is now well established that carbon monoxide and hydrocarbons play a part in the reduction of NOₓ. For example, taking the hydrocarbon as C₃H₆, the following reactions could take place:

18NO + 2C₃H₆ → 9N₂ + 6CO₂ + 6H₂O

2NO + 2CO → N₂ + 2CO₂

The molar ratios required for NOₓ reduction, namely C₃H₆ to NO and CO to NO, are exceeded over the European test cycle on average with a diesel engine. However, there is competition between NOₓ and oxygen for the reducing species, and normally only quite low NOₓ conversions, (e.g. much less than 10%) are achieved in the European test cycle.

In the present invention, NOₓ conversion under certain conditions is increased by increasing the relative quantity of hydrocarbons in the exhaust through injection of fuel into the exhaust upstream of the first catalyst system. Additionally, hydrocarbon storage using zeolites or the like, may be useful. It will be appreciated that there is a small fuel consumption penalty if fuel injection into the exhaust is used. The high activity second catalyst system is readily capable of catalysing the oxidation of any excess hydrocarbons under the lean conditions.

Conventional catalyst manufacturing technology may be used.

The first and second catalyst systems may be mounted in a single "can" in the exhaust system, or they may be separated by a length of exhaust pipe.

The present engine is generally a diesel, lean-burn gasoline or direct injection gasoline engine.

The present invention is illustrated by the following Tests.

### Test 1

The increase of NOₓ selectivity corresponding to decreasing platinum loading was shown for a standard 6in (15.2cm) catalyst brick. Exhaust from a 1.9 litre turbo direct injection diesel bench engine, operating at steady state conditions was used. NOₓ selectivity is measured as % NOₓ conversion at 230°C/% hydrocarbon conversion at 230°C. The results are shown in Table 1 below.

**TABLE 1**

| Pt loading (gm⁻³) (g/ft³) | NOₓ selectivity at 230°C |
|---|---|
| 357 (10) | 1.00 |
| 893 (25) | 0.40 |
| 1786 (50) | 0.34 |
| 2679 (75) | 0.33 |
| 3571 (100) | 0.31 |

A reduced loading of catalyst therefore improves selectivity.

### Test 2

The increase in NOₓ conversion, at a constant platinum loading (1.5g) *per* catalyst brick, by decreasing space velocity and reducing loading in g/unit volume was measured. The same engine and conditions was used as in Test 1. The NOₓ conversion was measured with "raw" exhaust from the engine ("Passive") and with the addition of hydrocarbon (HC) into the exhaust to yield a HC3:NOₓ ratio of 2.0:1 HC3 means that the hydrocarbon is counted as equivalent propane.

**TABLE 2**

| Catalyst length cm (inches) | Maximum NOₓ Conversion (%) | |
|---|---|---|
| | Passive | Added HC |
| 2.5 (1) | 6 | 13 |
| 5.1 (2) | 12 | 17 |
| 7.6(3) | 16 | 22 |
| 10.1 (4) | 18 | 25 |
| 12.7 (5) | 22 | 29 |
| 15.2 (6) | 25 | 33 |

It can clearly be seen that increasing catalyst length and hence decreasing space velocity is beneficial in overall NOₓ conversion.

### EXAMPLE 1

A 1996 model passenger car with a 2.5 litre turbo direct injection diesel engine was used with several different exhaust catalyst systems, for standard EUDC emission tests (Extra Urban Driving Cycle emission tests of the European Union). The results are shown in Table 3 below.

**TABLE 3 Catalyst System**

| | | | | | | |
|---|---|---|---|---|---|---|
| | HC | CO | NOₓ | HC+ NOₓ | PM (4) | %NOₓ |
| No Catalyst | 0.322 | 1.034 | 0.394 | 0.715 | 0.089 | 0.0 |
| OEM Catalyst (1) | 0.196 | 0.913 | 0.389 | 0.585 | 0.081 | 1.3 |
| New Catalyst (2) | 0.067 | 0.336 | 0.332 | 0.399 | 0.079 | 15.7 |
| Lean-NOₓ Catalyst (3) | 0.054 | 0.495 | 0.294 | 0.347 | 0.073 | 25.4 |
| Lean-NOₓ Catalyst + Oxidation Catalyst (5) | 0.037 | 0.237 | 0.292 | 0.329 | 0.077 | 25.9 |

| | | | | | | |
|---|---|---|---|---|---|---|
| Notes: | | | | | | |
| (1) OEM (Original Equipment Manufacturer) catalyst, 15.2cm (6 in) long, with 1643g m⁻³ (46g/ft⁻³) Pt. | | | | | | |
| (2) Advanced oxidation catalyst, 15.2cm (6 in) long with 1429g m⁻³ (40g/ft⁻³) Pt. | | | | | | |
| (3) Lean-NOₓ catalyst, 30.5cm (12 in) long, with (893gm⁻³ (25g/ft⁻³) Pt. | | | | | | |
| (4) PM = Particulate Matter, g/km | | | | | | |
| (5) Lean-NOₓ catalyst, 22.9cm (9 in) long, with 893gm⁻³ (25g/ft⁻³) Pt, followed by oxidation catalyst, 7.6cm (3 in) long, with 3571gm⁻³ (100g/ft⁻³) Pt. | | | | | | |

All the catalysts used were fresh, *i.e.* without ageing.

It can readily be seen that the low loading, low space velocity Lean-NOₓ Catalyst is very effective in converting NOₓ, and that the combination according to the invention is remarkably effective.

## Claims

1. A lean burn internal combustion engine comprising an emission control system comprising:
a) a Lean NOₓ Catalyst for reducing NOₓ in an exhaust gas to N₂ in the presence of a hydrocarbon reductant, which Lean NOₓ Catalyst comprising platinum as a sole Platinum Group Metal;
b) an oxidation catalyst comprising a Platinum Group Metal; and
c) means to inject hydrocarbon fuel into the exhaust gas prior to the Lean NOₓ Catalyst wherein the Lean NOₓ Catalyst is disposed between the engine and the oxidation catalyst and wherein the platinum is present in the Lean NOₓ Catalyst at a loading of <1071g m⁻³ (<30g/ft³).

2. An engine according to claim 1, wherein the activity of the Lean NOₓ Catalyst is such that it has a ratio of % NO conversion to % hydrocarbon conversion of at least 0.2 as measured at a temperature of 230°C, a space velocity of 25000hr⁻¹ and a hydrocarbon:NOₓ input ratio of 3:1 counting the hydrocarbon as equivalent propane.

3. An engine according to claim 1 or 2, wherein the Lean NOₓ Catalyst comprises an alkaline earth metal.

4. An engine according to claim 1, 2 or 3, wherein the Lean NOₓ Catalyst comprises a zeolite.

5. An engine according to claim 1, 2, 3 or 4, wherein the activity of the oxidation catalyst is such that it has a % hydrocarbon conversion of greater than 80% and a % carbon monoxide conversion of greater than 70% as measured at a temperature of 230°C, a space velocity of 25000hr⁻¹ and a hydrocarbon:NOₓ input ratio of 3:1 counting the hydrocarbon as equivalent propane.

6. An engine according to any preceding claim, wherein the oxidation catalyst comprises a base metal.

7. An engine according to any preceding claim, wherein the oxidation catalyst Platinum Group Metal is platinum, optionally at a loading of 3571 g m⁻³ (100 g ft⁻³).

8. An engine according to any preceding claim, wherein the Lean NOₓ Catalyst is coated on two catalyst monoliths arranged in parallel.

9. An engine according to any preceding claim, wherein the engine is a diesel engine, a lean-bum gasoline engine or a direct injection gasoline engine.

10. A process for the control of emissions from a lean-bum internal combustion engine, which process comprising:
a) introducing hydrocarbon fuel into exhaust gas from the engine;
b) passing the exhaust gas from step (a) over a Lean NOₓ Catalyst to reduce NOₓ in the exhaust gas to N₂ in the presence of the hydrocarbon reductant, which Lean NOₓ Catalyst comprising platinum as a sole Platinum Group Metal; and
c) passing the product gases exiting from the Lean NOₓ Catalyst over an oxidation catalyst comprising a Platinum Group Metal to oxidise hydrocarbon and carbon monoxide, wherein the platinum is present in the Lean NOₓ Catalyst at a loading of <1071 g m⁻³ (<30gft⁻³).

11. A process according to claim 10, wherein the space velocity of exhaust gas over the Lean NOₓ Catalyst is below 40000hr⁻¹.

12. A process according to claim 10 or 11, wherein the space velocity of exhaust gas over the oxidation catalyst is 40000-80000hr⁻¹.

## Patentansprüche

1. Magerverbrennungsmotor, umfassend ein Emissionssteuerungssystem, umfassend:
a) einen Mager-NOₓ-Katalysator zur Reduktion von NOₓ in einem Abgas zu N₂ in Gegenwart eines Kohlenwasserstoffreduktionsmittels, wobei der Mager-NOₓ-Katalysator Platin als einziges Platingruppenmetall umfasst;
b) einen Oxidationskatalysator, der ein Platingruppenmetall umfasst; und
c) eine Einrichtung, um Kohlenwasserstofftreibstoff in das Abgas zu injizieren vor dem Mager-NOₓ-Katalysator, wobei der Mager-NOₓ-Katalysator angeordnet ist zwischen dem Motor und dem Oxidationskatalysator und wobei das Platin in dem Mager-NOₓ Katalysator mit einer Beladung von < 1071 g m⁻³ (< 30 g/ft³) vorliegt.

2. Motor gemäß Anspruch 1, wobei die Wirksamkeit des Mager-NOₓ-Katalysators so ist, dass er ein Verhältnis von prozentualem (%) NO-Umsatz zu prozentualem (%) Kohlenwasserstoffumsatz von mindestens 0,2 aufweist, gemessen bei einer Temperatur von 230 °C, einer Raumgeschwindigkeit von 25000 h⁻¹ und einem Kohlenwasserstoff:NOₓ-Einspeisungsverhältnis von 3:1, wobei der Kohlenwasserstoff als Propan äquivalent gezählt wird.

3. Motor gemäß Anspruch 1 oder 2, wobei der Mager-NOₓ-Katalysator ein Erdalkalimetall umfasst.

4. Motor gemäß Anspruch 1, 2 oder 3, wobei der Mager-NOₓ-Katalysator einen Zeolith umfasst.

5. Motor gemäß Anspruch 1, 2, 3 oder 4, wobei die Wirksamkeit des Oxidationskatalysators so ist, dass er einen prozentualen (%) Kohlenwasserstoffumsatz von größer als 80 % aufweist und einen prozentualen (%) Kohlenmonoxidumsatz von größer als 70 %, gemessen bei einer Temperatur von 230 °C, einer Raumgeschwindigkeit von 25000 h⁻¹ und einem Kohlenwasserstoff:NOₓ-Einspeisungsverhältnis von 3:1, wobei der Kohlenwasserstoff als Propan äquivalent gezählt wird.

6. Motor nach einem beliebigen vorstehenden Anspruch, wobei der Oxidationskatalysator ein unedles Metall umfasst.

7. Motor nach einem beliebigen vorstehenden Anspruch, wobei das Oxidationskatalysatorplatingruppenmetall für Platin steht, gegebenenfalls mit einer Beladung von 3571 g m⁻³ (100 g ft⁻³).

8. Motor nach einem beliebigen vorstehenden Anspruch, wobei der Mager-NOₓ-Katalysator beschichtet ist auf zwei Katalysatormonolithen, die parallel angeordnet sind.

9. Motor nach einem beliebigen vorstehenden Anspruch, wobei der Motor für einen Dieselmotor, einen Magerverbrennungsottomotor oder einen Direkteinspritzungsottomotor steht.

10. Verfahren zur Steuerung von Emissionen aus einem Magerverbrennungsmotor, wobei das Verfahren umfasst:
a) Einführen von Kohlenwasserstofftreibstoff in Abgas aus dem Motor;
b) Leiten des Abgases aus Stufe (a) über einen Mager-NOₓ-Katalysator, um NOₓ in dem Abgas zu N₂ zu reduzieren in Gegenwart des Kohlenwasserstoffreduktionsmittels, wobei der Mager-NOₓ-Katalysator Platin als einziges Platingruppenmetall umfasst; und
c) Leiten der Produktgase, die aus dem Mager-NOₓ-Katalysator kommen über einen Oxidationskatalysator, der ein Platingruppenmetall umfasst, um Kohlenwasserstoff und Kohlenmonoxid zu oxidieren, wobei das Platin in dem Mager-NOₓ-Katalysator mit einer Beladung von < 1071 g m⁻³ (< 30 g ft⁻³) vorliegt.

11. Verfahren gemäß Anspruch 10, wobei die Raumgeschwindigkeit von Abgas über dem Mager-NOₓ₋Katalysator unterhalb von 40000 h⁻¹ liegt.

12. Verfahren gemäß Anspruch 10 oder 11, wobei die Raumgeschwindigkeit von Abgas über dem Oxidationskatalysator 40000 bis 80000 h⁻¹ beträgt.

## Revendications

1. Moteur à combustion interne à mélange pauvre comprenant un système antipollution comprenant :
a) un catalyseur pauvre à NOx pour réduire le NOx dans un gaz d'échappement en N₂ en présence d'un réducteur hydrocarbure, ledit catalyseur pauvre à NOx comprenant du platine comme métal exclusif du groupe du platine ;
b) un catalyseur d'oxydation comprenant un métal du groupe du platine ; et
c) un moyen pour injecter un carburant hydrocarbure dans le gaz d'échappement avant le catalyseur pauvre à NOx dans lequel le catalyseur pauvre à NOx est déposé entre le moteur et le catalyseur d'oxydation et dans lequel le platine est présent dans le catalyseur pauvre à NOx à une charge de < 1071 g m⁻³ (< 30 g/ft³).

2. Moteur selon la revendication 1, dans lequel l'activité du catalyseur pauvre à NOx est telle qu'il a un rapport de % de conversion de NO sur le % de conversion d'hydrocarbure d'au moins 0,2 tel que mesuré à une température de 230°C, une vitesse spatiale de 25 000 hr⁻¹ et un rapport d'alimentation hydrocarbure/NOx de 3/1 en comptant l'hydrocarbure en équivalent propane.

3. Moteur selon la revendication 1 ou 2, dans lequel le catalyseur pauvre à NOx comprend un métal alcalino-terreux.

4. Moteur selon la revendication 1, 2 ou 3, dans lequel le catalyseur pauvre à NOx comprend une zéolite.

5. Moteur selon la revendication 1, 2, 3 ou 4, dans lequel l'activité du catalyseur d'oxydation est telle qu'il a un % de conversion d'hydrocarbure de plus de 80 % et un % de conversion du monoxyde de carbone de plus de 70 % tel que mesuré à une température de 230 °C, une vélocité spatiale de 25 000 hr⁻¹ et un rapport d'alimentation hydrocarbure/NOx de 3/1 en comptant l'hydrocarbure en équivalent propane.

6. Moteur selon l'une quelconque des revendications précédentes, dans lequel le catalyseur d'oxydation comprend un métal de base.

7. Moteur selon l'une quelconque des revendications précédentes, dans lequel le métal du groupe du platine catalyseur d'oxydation est du platine, de manière facultative à une charge de 3 571 g m⁻³ (100 g ft⁻³).

8. Moteur selon l'une quelconque des revendications précédentes, dans lequel le catalyseur pauvre à NOx est appliqué sur deux monolithes catalyseurs arrangés en parallèle.

9. Moteur selon l'une quelconque des revendications précédentes, dans lequel le moteur est un moteur diesel, un moteur à essence à mélange pauvre ou un moteur à essence à injection directe.

10. Procédé pour le contrôle des émissions d'un moteur à combustion interne à mélange pauvre, lequel procédé comprenant les étapes consistant à :
a) introduire un carburant hydrocarbure dans du gaz d'échappement provenant du moteur ;
b) faire passer le gaz d'échappement provenant de l'étape (a) sur un catalyseur pauvre à NOx pour réduire le NOx dans le gaz d'échappement en N₂ en présence du réducteur hydrocarbure, lequel catalyseur pauvre à NOx comprenant du platine comme métal exclusif du groupe du platine ; et
c) faire passer les produits gazeux sortant du catalyseur pauvre à NOx sur un catalyseur d'oxydation comprenant un métal du groupe du platine pour oxyder l'hydrocarbure et le monoxyde de carbone, dans lequel le platine est présent dans le catalyseur pauvre à NOx à une charge de < 1071 g m⁻³ (< 30 g ft⁻³).

11. Procédé selon la revendication 10, dans lequel la vitesse spatiale du gaz d'échappement sur le catalyseur pauvre à NOx est inférieure à 40 000 hr⁻¹.

12. Procédé selon la revendication 10 ou 11, dans lequel la vitesse spatiale du gaz d'échappement sur le catalyseur d'oxydation est de 40 000 à 80 000 hr⁻¹.
